# EUROPÄISCHE PATENTANMELDUNG

(11) **EP 3 005 871 A1**
(43) Veröffentlichungstag der Anmeldung: **13.04.2016**
(21) Anmeldenummer: 14188044.3
(22) Anmeldetag: 08.10.2014
(51) Int. Cl.: A01M 7/00

(54) **Feldspritze mit Droplegs und Dropleg-Adapter**

(71) Anmelder: Bayer CropScience AG, 40789 Monheim am Rhein (DE)
(72) Erfinder: Bahr, Kevin, 47259 Duisburg (DE)
(74) Vertreter: Albiger, Jonas

(57) **Zusammenfassung**

Die Erfindung betrifft eine Feldspritze (10) zum Ausbringen von Pflanzenschutzmittel oder Dünger, mit einem Gestänge (13), das sich in Einsatzlage quer zu einer Zugrichtung (1) der Feldspritze (10) erstreckt und mit mehreren Spritzrohren, sogenannte Droplegs (18), die entlang des Gestänges (13) voneinander beabstandet an dem Gestänge (13) befestigt sind, wobei ein Dropleg (18) an einem oberen Ende durch Befestigungsmittel an dem Gestänge (13) befestigt ist und an einem unteren Ende eine Spritzdüse (19) aufweist, um das Pflanzenschutzmittel im mittleren oder unteren Bereich eines Pflanzenbestands auszubringen. Die Feldspritze (10) zeichnet sich dadurch aus, dass die Befestigungsmittel einen Magnet (25) aufweisen, wobei durch die magnetische Kraft des Magneten (25) das obere Ende des Droplegs (18) an einer Strebe (15, 16) des Gestänges (13) ortsfest gehalten wird. Die Erfindung betrifft auch ein Drogleg-Adapter.

## Beschreibung

Die Erfindung betrifft eine Feldspritze zum Ausbringen von Pflanzenschutzmittel oder Dünger, die ein Gestänge und mehrere Spritzrohre, sogenannte Droplegs, umfasst. Des Weiteren betrifft die Erfindung ein Dropleg-Adapter zur Befestigung des Droplegs an dem Gestänge der Feldspritze.

In Einsatzlage erstreckt sich das horizontale Gestänge quer zu einer Zugrichtung der Feldspritze und weist üblicherweise eine Länge von 10 und mehr Metern auf. Soweit keine Droplegs verwendet werden, wird durch Spritzdüsen in dem Gestänge oder an dem Gestänge dabei das Pflanzenschutzmittel ausgebracht. Die Spritzdüsen befinden sich somit auf der vertikalen Höhe des Gestänges.

Es ist bekannt, die Droplegs entlang des Gestänges mit einem gewissen seitlichen Abstand zueinander an dem Gestänge zu befestigen. Dabei wird ein Dropleg an einem oberen Ende des Droplegs durch Befestigungsmittel an dem Gestänge befestigt und weist an einem unteren Ende eine Spritzdüse auf, um das Pflanzenschutzmittel oder den Dünger bodennah im mittleren oder unteren Bereich eines Pflanzenbestands auszubringen. Durch die Nachrüstung einer herkömmlichen Feldspritze mit Droplegs lässt sich somit die Ebene der Spritzdüsen daher um etwa die Länge der Droplegs in Richtung Boden absenken. Ein derartiges bodennahes Ausbringen, das auch als Unterblattspritzverfahren bezeichnet wird, findet vor allem im Bereich des Gemüsebaus mit Fungiziden und Insektiziden seine Anwendung. So können Nutzinsekten wie Bienen geschützt werden, wenn die Ebene der Spritzdüsen unterhalb der Blütenebene liegt und die Spritzdüsen nach unten gerichtet sind. Auch lassen sich durch das Unterblattspritzverfahren Herbizide vor allem zur späten Unkrautkontrolle in Mais und Zuckerrüben ausbringen. Auch das Ausbringen von Stickstoffdünger ist mit Hilfe der Droplegs möglich.

Bekannte Befestigungsmittel zum Befestigen der Droplegs an dem Gestänge der Feldspritze weisen eine Adapterplatte auf, die mit Hilfe von Schrauben und einem Konterstück an einer als Vierkantrohr ausgebildeten Strebe des Gestänges fixiert wird. Die Adapterplatte weist dabei einen Stift auf, auf den das obere Ende des Droplegs geschoben wird. Anschließend wird das Dropleg mit einer Unterlegscheibe sowie einem Sicherungssplint gesichert.

Um den seitlichen Abstand zwischen den Droplegs entlang dem Gestänge zu verändern, um beispielsweise auf einen anderen Abstand von Pflanzenreihen einer anderen Anbaukultur reagieren zu können, müssen die Adapterplatten gelöst und entlang des Gestänges verschoben werden, um sie dann im neuen Abstand zueinander wieder zu fixieren. Das Lösen und anschließende Festziehen der Schrauben ist aufwändig und nur mit entsprechendem Werkzeug zu bewerkstelligen.

Um die Feldspritze auf öffentlichen Wegen bewegen zu können, muss das Gestänge eingefahren bzw. eingeklappt werden. Je nach Konstruktion des Gestänges kann es dabei erforderlich sein, dass die einzelnen Droplegs zuvor von den Adapterplatten demontiert werden müssen. Zudem kann es notwendig sein, auch die Adapterplatten zu demontieren, damit sich das Gestänge auch problemlos in seine Transportlage zusammenklappen oder zusammenlegen lässt. Dies führt jedoch zu erheblichen Rüstzeiten, da vor dem nächsten Einsatz der Feldspritze die Droplegs und die Adapterplatten dann wieder neu montiert werden müssen.

Bei der Befestigung mit Adapterplatte, Konterstück und Schrauben besteht zudem die Gefahr, dass die Droplegs aufgrund ihrer Fixierung an dem Gestänge knicken oder abbrechen, wenn durch größere Bodenunebenheiten der Abstand Boden zu Gestänge zu klein wird und die Droplegs auf den Boden aufsetzen und möglicherweise knicken oder brechen.

Der Erfindung liegt daher die Aufgabe zu Grunde, eine Feldspritze mit Droplegs bereitzustellen, die einfach zu handhaben und möglichst robust ist.

Die der Erfindung zu Grunde liegende Aufgabe wird mit Anspruch 1 gelöst. Ausführungsbeispiele der Erfindung können den zu Anspruch 1 abhängigen Unteransprüchen entnommen werden.

Die Feldspritze gemäß Anspruch 1 zeichnet sich dadurch aus, dass die Befestigungsmittel zum Befestigen der Droplegs an dem Gestänge der Feldspritze einen Magneten aufweisen, wobei durch die magnetische Kraft des Magneten das obere Ende das Droplegs an einer Strebe des Gestänges ortsfest gehalten wird. Um ein derart befestigtes Dropleg von dem Gestänge zu lösen, muss lediglich die magnetische Kraft des Magneten überwunden werden. Entsprechend kann das Dropleg auch einfach mit dem Gestänge verbunden werden, indem der Magnet einfach an die entsprechende Stelle am Gestänge angesetzt wird. Die Erfindung macht sich somit die Erkenntnis zu Nutze, dass üblicherweise das Gestänge von Feldspritzen aus ferromagnetischem Material wie beispielsweise Eisen oder Stahl ist. Das Befestigen und Lösen der Droplegs gestaltet sich somit gegenüber den bekannten Befestigungsmitteln mit Adapterplatte, Schrauben und Konterstück entscheidend einfacher.

Auch ist es durch die Erfindung leichter, einen seitlichen Abstand zwischen der einzelnen Droplegs entlang des Gestänges neu einzustellen. Dazu müssen die Magnete der einzelnen Droplegs vom Gestänge abgezogen werden und entsprechend dem neuen Abstand wieder neu angesetzt werden. Ein aufwändiges Auf- und Anschrauben entfällt.

Ein weiterer Vorteil ergibt sich dadurch, dass das Dropleg nur durch magnetische Kraft an dem Gestänge ortsfest fixiert ist. Setzt beispielsweise ein herkömmlich befestigtes Dropleg mit seinem unteren Ende auf dem Boden auf und verringert sich der Abstand zwischen Gestänge und Boden durch Bodenunebenheiten weiter, kann das Dropleg durch Biegen oder Knicken nachhaltig beschädigt werden. Durch den Magnet hingegen wird eine Sollbruchstelle bei der Befestigung zwischen Dropleg und Gestänge definiert. Wirken auf das Dropleg zu große Kräfte, so ruft das entsprechende Reaktionskräfte an der Befestigung zwischen Dropleg und Gestänge hervor. Die maximale Haltekraft des Magneten kann also so eingestellt werden, dass im Normalbetrieb mit den dabei üblich auftretenden Kräften das Dropleg sicher am Gestänge befestigt ist. Wird jedoch ein bestimmter Wert überschritten, löst sich der Magnet vom Gestänge, ohne dass es dabei zu direkten Beschädigungen kommt. Mit anderen Worten wird durch den Magnet ein Abscherpunkt geschaffen, um Beschädigungen des Droplegs zu vermeiden.

Auch durch Befestigungsmittel mit einem Kraftschluss ließe sich ein definierter Abscherpunkt zur Vermeidung von Beschädigungen der Droplegs bereitstellen. Die Befestigungsmittel sind dabei - auch unabhängig von dem Einsatz eines Magneten - so beschaffen, dass ab einer bestimmten Kraft die Befestigung sich zwischen Dropleg und Gestänge zerstörungsfrei löst.

Letztlich sei auch auf einen weiteren Vorteil hingewiesen, wenn zur Befestigung der Droplegs Magnete verwendet werden. So ließen sich die Droplegs, wenn sie zwecks Transport der Feldspritze nicht am Gestänge befestigt sein können, über die magenetische Kraft sich in gesicherter Form beispielsweise an einer Zugmaschine transportieren.

Ein mit einem Magnet an dem Gestänge ortsfest befestigtes Dropleg muss üblicherweise noch an einen Tank der Feldspritze angeschlossen werden muss, in dem sich das Pflanzenschutzmittel ("Pflanzenschutzmittel" wird im Folgenden als Synonym verwendet für alle Stoffe, die durch eine Feldspritze ausgebracht werden können) befindet. Ein entsprechender Anschluss an den Tank erfolgt vorzugsweise über Öffnungen oder Spritzdüsen, die bei einer herkömmlichen Feldspritze in dem Gestänge bzw. direkt daran vorgesehen sind. Über einen Schlauch, der diese Öffnungen oder Spritzdüsen im oder am Gestänge mit einem Anschluss des Droplegs für das Pflanzenschutzmittel verbindet, kann somit Pflanzenschutzmittel von dem Tank zum Dropleg geleitet werden.

Das Dropleg kann um eine Achse parallel zur Zugrichtung der Feldspritze drehbar an der Strebe des Gestänges befestigt sein. Dadurch ist es möglich, dass das Dropleg in einer Ebene senkrecht zur Zugrichtung der Feldspritze pendeln kann. Somit kann sich das Dropleg bzw. dessen Spritzdüse am unteren Ende sich selber zu einer Pflanzenreihe ausrichten.

Der Magnet kann eine Bohrung aufweisen, durch die eine Schraube greift, wobei zwischen einer Topfseite des Magneten und einer Sicherungsmutter eine Öse des Droplegs angeordnet ist, die einen Schraubenschaft der Schraube umgreift. Vorzugsweise ist die Sicherungsmutter dabei eine selbst sichernde Mutter.

Die Sicherungsmutter kann nur soweit auf die Schraube aufgedreht sein, dass zwischen der Topfseite des Magneten und der Sicherungsmutter auf dem Schraubenschaft ein Spiel besteht, so dass sich die Öse näherungsweise kraftfrei um die Achse des Schraubenschaft drehen kann. Auch ist es möglich, die Sicherungsmutter fester anzuziehen, so dass eine Drehung des Droplegs um den Schraubenschaft nur gegen eine gewisse Kraft möglich ist.

Um die Schraube kann eine Drahtschlaufe zur Verliersicherung des Droplegs gelegt sein. Sollte sich der Magnet und somit das Dropleg von dem Gestänge lösen, so geht das Dropleg nicht verloren, da die Drahtschlaufe das Dropleg dann hinter dem Gestänge herziehen würde. Die ortsfeste Festlegung des Droplegs an dem Gestänge erfolgt jedoch nur durch den Magneten bzw. durch die magnetische Kraft des Magneten.

In einem Ausführungsbeispiel liegt eine Haftseite des Magneten im Wesentlichen in einer vertikalen Ebene und ist von der Zugrichtung abgewandt. Die Strebe des Gestänges, an der der Magnet aufgesetzt ist, weist bevorzugt eine vertikale Seitenwand auf. Bei einer derartigen Anbringung des Magneten an die Strebe lässt sich realisieren, dass das Dropleg bei den gewöhnlichen Kräften im Einsatz fest an dem Gestänge sitzt und sich nur dann von dem Gestänge löst, wenn das Dropleg durch Knicken oder Verbiegen zerstört zu werden droht. Alternativ kann die Haftseite des Magneten der Zugrichtung zugewandt sein. Auch ist es denkbar, dass der Magnet von unten an einer unteren horizontalen Seitenwand oder von oben an einer oberen horizontalen Seitenwand anhaftet. Zudem kann die Seitenwand der Strebe zur Vertikalen bzw. Horizontalen geneigt sein, so dass dann auch die Haftseite des Magneten eine entsprechende Neigung aufweist.

Auf der Strebe des Gestänges kann wenigstens ein Voradapter befestigt sein, der eine Metallplatte und vorzugsweise eine Gummischicht umfasst. Der Voradapter kann auf der Strebe aufgeklebt sein, wobei bevorzugt auch die Metallplatte auf der Gummischicht angeklebt ist. Ein Voradapter ist dann notwendig, wenn die Strebe des Gestänges, an der das Dropleg befestigt werden soll, nicht magnetisch ist. Vorzugsweise ist die Metallplatte so ausgelegt, dass sie genau zur Aufnahme eines Droplegs dient. Alternativ kann sich die Metallplatte auch über einen längeren Abschnitt des Gestänges erstrecken, so dass an eine Metallplatte auch mehrere Droplegs (bzw. Magneten) gesetzt werden können, auch wenn diese voneinander 45, 60 oder 90 cm voneinander beabstandet sind. Ein Voradapter kann auch dann notwendig sein, wenn das Gestänge keine gerade Fläche bildet, an die der Magnet angesetzt werden kann. Beispielsweise könnte somit der Voradapter eine konkave Rückfläche aufweisen, um ihn vollflächig an eine Rohrstrebe des Gestänges befestigen oder kleben zu können.

In einer Ausführung der Erfindung beträgt eine maximale Haftkraft des Magneten senkrecht zur Haftfläche zwischen 100 und 1000 N (Newton). Um den Magneten zu lösen, ist somit eine Zugkraft quer zur Haftfläche notwendig, die, wenn die obere Grenze zu Grunde gelegt wird, 1000 Newton übersteigt. Vorzugsweise beträgt die maximale Haltekraft 400 bis 800 Newton. Es sei jedoch darauf hingewiesen, dass durch eine Bewegung entlang der Haftfläche des Magneten der Magnet mit einer geringeren Kraft von dem Gestänge gelöst oder abgeschert werden kann.

Eine weitere Aufgabe der Erfindung, die Bereitstellung eines einfach handhabbaren Dropleg-Adapters zur Befestigung eines Droplegs an dem Gestänge der Feldspritze wird durch Anspruch 9 gelöst. Der Dropleg-Adapter weist erfindungsgemäß einen Magneten auf, wobei durch die magnetische Kraft des Magneten ein oberes Ende des Droplegs an einer Strebe des Gestänges befestigbar ist.

Der Dropleg-Adapter kann dabei so ausgeführt sein, wie er in der obigen Beschreibung zur Feldspritze bereits beschrieben wird. Beispielsweise kann der Dropleg-Adapter die besagte Schraube umfassen, die durch eine Bohrung des Magneten greift, wobei zwischen der Topfseite des Magneten und der Sicherungsmutter eine Öse des Dropleg angeordnet werden kann, die im angelegten Zustand den Schraubenschaft der Schraube umgreift.

Die Erfindung wird anhand der Figuren näher beschrieben. Es zeigen:
- Figur 1: schematisch eine Feldspritze in der Seitenansicht;
- Figur 2: die Feldspritze der Figur 1 von hinten; und
- Figur 3: im Schnitt einen Dropleg-Adapter.

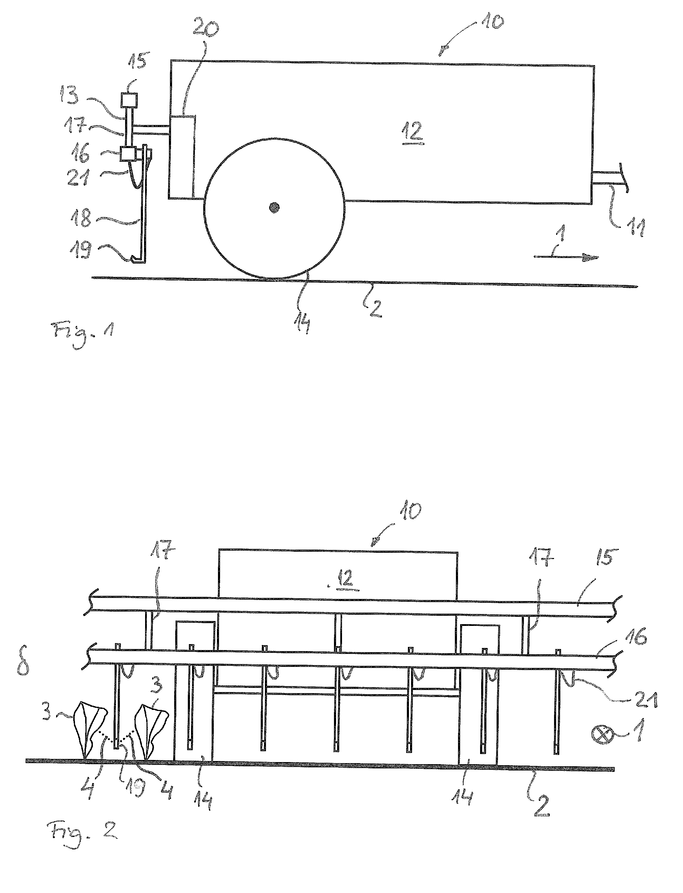

Figur 1 zeigt eine Feldspritze, die in ihrer Gesamtheit mit 10 bezeichnet wird.

Figur 2 zeigt die Feldspritze 10 der Figur 1 von hinten.

Die Feldspritze 10 weist eine nur teilweise dargestellte Deichsel 11 auf, mit der die Feldspritze an eine Zugmaschine angekoppelt werden kann. Mit 1 ist die Zugrichtung bezeichnet, mit der die Feldspritze 10 durch die Zugmaschine über ein Feld gezogen werden kann, um auf diesem Feld Pflanzenschutzmittel auszubringen.

Die Feldspritze 10 umfasst einen Tank 12, in dem sich das auszubringende Pflanzenschutzmittel befindet. Über ein hier nicht weiter dargestelltes Leitungssystem gelangt das Pflanzenschutzmittel im Tank 12 zu einem Gestänge 13, das an einem hinteren Bereich des Tanks 12 angeordnet ist. Wie insbesondere der Figur 2 zu entnehmen ist, erstreckt sich das Gestänge in horizontaler Richtung parallel zu einem Boden 2 und quer zur Zugrichtung 1. In Figur 2 ist das Gestänge in seiner längliche Erstreckung abschnittsweise dargestellt. Die Länge des Gestänges 13 kann um den Faktor 10 bis 20 größer sein als der Abstand der beiden Räder 14 der hier als Einachser ausgebildeten Feldspritze.

Das Gestänge 13 weist eine obere Strebe 15 und eine untere Strebe 16 auf, die durch mehrere Verbindungsstreben 17 miteinander verbunden sind. An der unteren Strebe 16 sind mehrere Spritzrohre oder Droplegs 18 angeordnet. An einem oberen Ende sind die Droplegs jeweils an der unteren Strebe 16 des Gestänges 13 befestigt. An einem unteren Ende weist das Dropleg 18 eine Spritzdüse 19 auf.

Wie der Figur 2 zu entnehmen ist, ermöglicht die Spritzdüse 19 am unteren Ende des Droplegs 18, dass ein Pflanzenbestand, hier dargestellt durch zwei Pflanzen 3, von unten im so genannten Unterblattspritzverfahren mit dem Pflanzenschutzmittel gespritzt werden kann. Die gepunkteten Linien 4 stellen dabei die Strahlen aus der Spritzdüse 19 dar.

Über eine Pumpe 20 wird das Pflanzenschutzmittel aus dem Tank 12 in das Gestänge 13 gepumpt. An einer Unterseite der unteren Strebe 16 sind mehrere Öffnungen vorgesehen, an denen jeweils ein Verbindungsschlauch 21 angeschlossen ist. Der Verbindungsschlauch 21 verbindet die Öffnung in der unteren Strebe 16 mit dem jeweiligen Dropleg18. Somit gelangt im Pumpbetrieb das Pflanzenschutzmittel aus dem Tank 12 zum oberen Ende des Droplegs 18. Das Dropleg 18 leitet dann das Pflanzenschutzmittel zur Spritzdüse 19 weiter.

Die Feldspritze 10 der Figuren 1 und 2 basiert auf einer herkömmlichen Feldspritze, also auf einer Feldspritze ohne Droplegs. Bei Verwendung der Feldspritze ohne Droplegs befinden sich Spritzdüsen zum Ausbringen des Pflanzenschutzmittels direkt in den Öffnungen an der Unterseite der unteren Strebe 16. Man erkennt, dass durch die Verwendung der Droplegs die horizontale Ebene der Spritzdüsen bzw. die Ebene der Ausbringung um ungefähr die Länge der Droplegs 18 (sie beträgt bevorzugt 80 bis 120 cm) in Richtung Boden 2 verlegt werden kann.

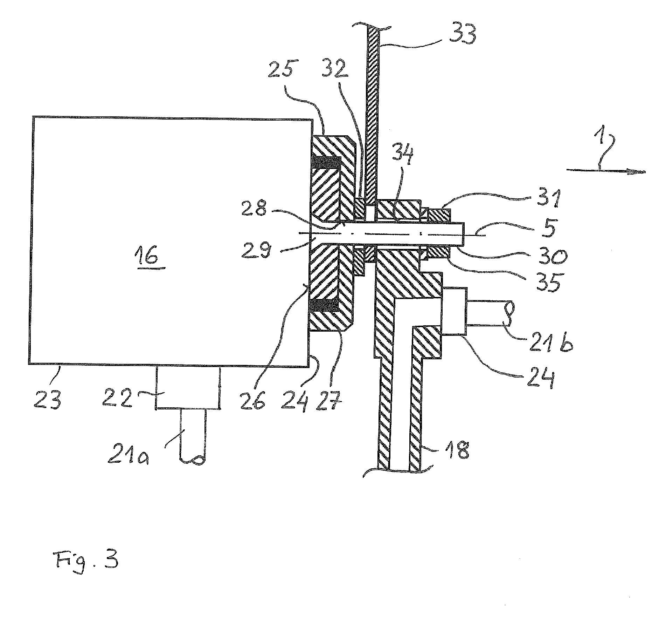

Figur 3 zeigt in Detail die Befestigung des Droplegs 18 an der unteren Strebe 16 des Gestänges 13. In Figur 3 ist nur der obere Teil des Droplegs 18 dargestellt. Auch zeigt Figur 3 nur die Enden 21a und 21b des Verbindungsschlauchs 21. Das Schlauchende 21a ist über einen Verschluss 22, der vorzugsweise als Bajonettverschluss ausgebildet ist, mit der an der Unterseite 23 der unteren Strebe 16 befindlichen Öffnung (in Figur 3 nicht weiter dargestellt) angeschlossen. Das andere Schlauchende 21b des Verbindungsschlauchs ist über einen Verschluss 24 mit dem Dropleg 18 verbunden.

Die untere Strebe 16 ist als Vierkantrohr aus Metall ausgebildet. An einer vertikalen Seitenwand 24 sitzt ein Magnet 25. Eine Haftfläche 26 des Magneten ist der Seitenwand 24 zugewandt und zu der Zugrichtung 1 abgewandt. Ein Topf 27 des Magneten, 20 kann aus rostfreiem Stahl sein. Als Magnetmaterial kann Neodym-Eisen-Bor verwendet werden. Der um eine Mittelachse 5 im Wesentlichen rotationssymmetrisch aufgebaute Magnet 25 weist eine Bohrung oder Zentralbohrung 28 auf, durch die eine Schraube 29, hier als Senkkopfschraube ausgeführt, gesteckt ist. An einem Schraubenschaft 30 der Senkkopfschraube 29 ist ein Außengewinde eingeformt, auf das sich eine selbst sichernde Sicherungsmutter 31 schrauben lässt. Zwischen der Sicherungsmutter 31 und dem Magnet 25 sitzen auf der Senkkopfschraube 29 eine erste Unterlegscheibe 32, eine Drahtschlaufe 33 sowie das Dropleg 18 mit einer Öse 34 und eine zweite Unterlegscheibe 35. Der Abstand zwischen der selbst sichernden Sicherungsmutter 31 und dem Magnet 25 ist dabei so eingestellt, dass sich das Dropleg näherungsweise momentan frei um die Mittelachse 5 verschwenken lässt.

Die Drahtschlaufe 33, von der in Figur 3 lediglich das Dropleg-seitige Ende dargestellt ist, stellt neben dem Magneten 25 eine weitere, jedoch nicht ortsfeste Verbindung zwischen Dropleg 18 und dem Gestänge 17 dar. Die Drahtschlaufe 33 hat die Aufgabe, das Dropleg 18 gegen Verlust zu sichern, wenn auf das Dropleg 18 Kräfte wirken, durch die der Magnet 25 von der unteren Strebe 16 bei Überwindung der magnetischen Haltekraft abgezogen wird.

Die Haltekraft des Magneten 25 ist vorzugsweise so eingestellt, dass die im üblichen Betrieb auf das Dropleg 18 wirkenden Kräfte ein Lösen des Magneten 25 von der Strebe 16 nicht verursachen können. Wirken jedoch auf das Dropleg 18 große Kräfte, die zur Zerstörung des Droplegs 18 führen können (beispielsweise wenn das Dropleg 18 zwischen Gestänge 17 und einem (unebenen) Boden eingeklemmt wird, löst sich der Magnet 25 von der Strebe 16, ohne dass dabei Beschädigungen auftreten.

Mit Hilfe des Magneten 25 lässt sich ein Dropleg ohne Werkzeug beliebig an einer Stelle der Strebe 16 anbringe. Somit können sehr einfach unterschiedliche Abstände zwischen den einzelnen Droplegs eingestellt werden. Auch ist eine Demontage des Droplegs 18 sehr einfach, wenn das Gestänge zwecks Transport auf einer öffentlichen Straße zusammengeklappt werden muss.

### Bezugszeichenliste

- 1: Zugrichtung
- 2: Boden
- 3: Pflanze
- 4: Spritzstrahl
- 5: Mittelachse

- 10: Feldspritze
- 11: Deichsel
- 12: Tank
- 13: Gestänge
- 14: Rad
- 15: Obere Strebe
- 16: Untere Strebe
- 17: Verbindungsstrebe
- 18: Dropleg
- 19: Spritzdüse
- 20: Pumpe
- 21: Verbindungsschlauch
- 22: Anschluss
- 23: Unterseite
- 24: Seitenwand
- 25: Magnet
- 26: Haftfläche
- 27: Topf
- 28: Zentralbohrung
- 29: Schraube
- 30: Schraubenschaft
- 31: Sicherungsmutter
- 32: Erste Unterlegscheibe
- 33: Drahtschlaufe
- 34: Öse
- 35: Zweite Unterlegscheibe

## Patentansprüche

1. Feldspritze (10) zum Ausbringen von Pflanzenschutzmittel oder Dünger, mit einem Gestänge (13), das sich in Einsatzlage quer zu einer Zugrichtung (1) der Feldspritze (10) erstreckt und mit mehreren Spritzrohren, sogenannte Droplegs (18), die entlang des Gestänges (13) voneinander beabstandet an dem Gestänge (13) befestigt sind, wobei ein Dropleg (18) an einem oberen Ende durch Befestigungsmittel an dem Gestänge (13) befestigt ist und an einem unteren Ende eine Spritzdüse (19) aufweist, um das Pflanzenschutzmittel im mittleren oder unteren Bereich eines Pflanzenbestands auszubringen, **dadurch gekennzeichnet, dass** die Befestigungsmittel einen Magnet (25) aufweisen, wobei durch die magnetische Kraft des Magneten (25) das obere Ende des Droplegs (18) an einer Strebe (15, 16) des Gestänges (13) ortsfest gehalten wird.

2. Feldspritze (10) nach Anspruch 1, **dadurch gekennzeichnet, dass** das Dropleg (18) um eine Achse parallel zur Zugrichtung (1) der Feldspritze (10) drehbar an der Strebe (15, 16) des Gestänges (13) befestigt ist.

3. Feldspritze (10) nach Anspruch 1 oder 2, **dadurch gekennzeichnet, dass** der Magnet (25) eine Bohrung (28) aufweist, durch die eine Schraube (29) greift, wobei zwischen einer Topfseite des Magneten (25) und einer Sicherungsmutter (31) eine Öse (34) des Dropleg (18) angeordnet ist, die einen Schraubenschaft (30) der Schraube (29) umgreift.

4. Feldspritze (10) nach Anspruch 3, **dadurch gekennzeichnet, dass** um die Schraube (29) eine Drahtschlaufe (33) zur Verliersicherung des Droplegs (18) gelegt ist.

5. Feldspritze (10) nach einem der Ansprüche 1 bis 4, **dadurch gekennzeichnet, dass** eine Haftseite (26) des Magneten (25) im Wesentlichen in einer vertikalen Ebene liegt und von der Zugrichtung (1) abgewandt ist.

6. Feldspritze (10) nach einem der Ansprüche 1 bis 5, **dadurch gekennzeichnet, dass** auf der Strebe (15, 16) des Gestänges (13) wenigstens ein Voradapter befestigt ist, der eine Metallplatte umfasst.

7. Feldspritze (10) nach Anspruch 6, **dadurch gekennzeichnet, dass** der Voradapter auf der Strebe (15, 16) aufgeklebt ist.

8. Feldspritze (10) nach einem der Ansprüche 1 bis 7, **dadurch gekennzeichnet, dass** eine maximale Haftkraft des Magneten (25) senkrecht zur Haftfläche (26) zwischen 100 und 1000 N beträgt.

9. Dropleg-Adapter zur Befestigung eines Droplegs (18) an einem Gestänge (13) einer Feldspritze (13), wobei sich das Gestänge (13) in Einsatzlage quer zu einer Zugrichtung (1) der Feldspritze (10) erstreckt, **dadurch gekennzeichnet, dass** der Dropleg-Adapter ein Magnet (25) aufweist, wobei durch die magnetische Kraft des Magneten (25) ein oberes Ende des Droplegs (18) an einer Strebe (15, 16) des Gestänges (13) befestigbar ist.
